# EUROPÄISCHE PATENTANMELDUNG

(11) **EP 2 028 054 A1**
(43) Veröffentlichungstag der Anmeldung: **25.02.2009**
(21) Anmeldenummer: 08013320.0
(22) Anmeldetag: 24.07.2008
(51) Int. Cl.: B60R 7/02, B60R 13/01, F16C 13/00, F16C 29/04, B60P 1/00, B60P 1/52, B60R 11/00

(54) **Führungsschlittenanordnung für eine Lastschiene eines Kraftfahrzeugs**

(30) Priorität: 20.08.2007 DE 102007040375
(71) Anmelder: BOS GmbH & Co. KG, 73760 Ostfildern (DE)
(72) Erfinder: Bohlke, Hartmut, 42369 Wuppertal (DE); Göbbels, Andreas, 51515 Kürten (DE); Salewski, Jürgen, 40599 Düsseldorf (DE); Sitzler, Wolfgang, 42111 Wuppertal (DE)
(74) Vertreter: Wilhelm, Peter

(57) **Zusammenfassung**

Eine Führungsschlittenanordnung für eine Lastschiene (2) eines Laderaumes eines Kraftfahrzeugs mit einem Schlittenträger (11), in dem wenigstens ein teilweise aus dem Schlittenträger herausragendes Rollelement (6) drehbar gelagert ist, ist bekannt.

Erfindungsgemäß weist das Rollelement einen in eine Führungsnut (3) der Lastschiene eintauchenden Führungsrollenabschnitt (7) sowie wenigstens zwei den Führungsrollenabschnitt beidseitig flankierende Wälzabschnitte (8) auf, die auf jeweils einem ebenen Oberflächenabschnitt der Lastschiene (4) abrollen, der parallel zu der Führungsnut verläuft, und die Wälzabschnitte umfassen eine elastisch nachgiebige Lauffläche (9).

## Beschreibung

Die Erfindung betrifft eine Führungsschlittenanordnung für eine Lastschiene eines Laderaumes eines Kraftfahrzeugs mit einem Schlittenträger, in dem wenigstens ein teilweise aus dem Schlittenträger herausragendes Rollelement drehbar gelagert ist.

Eine derartige Führungsschlittenanordnung ist aus der DE 10 2005 031 072 A1 bekannt. Das bekannte Lastschienensystem umfasst einen verschiebbaren Ladeboden, der auf insgesamt vier Führungsschlittenanordnungen abgestützt ist, wobei jeweils zwei Führungsschlittenanordnungen längs jeweils einer Lastschiene verfahrbar angeordnet sind. Die Lastschienen sind in einen Boden des Laderaumes des Kraftfahrzeugs eingebettet und weisen ein nach oben offenes, im Wesentlichen C-förmiges Hohlprofil auf. Durch den C-förmigen Querschnitt wird bei jeder Lastschiene eine nach oben offene, längs der Lastschiene erstreckte Führungsnut gebildet. Jede Führungsschlittenanordnung umfasst einen in die Führungsnut eingreifenden Gleitstein. Jede Führungsschlittenanordnung weist zudem insgesamt vier Rollelemente auf, die teilweise nach unten aus einem als Schlittenträger dienenden Schlittenkörper der Führungsschlittenanordnung herausragen und auf entsprechend ebenen Oberflächen der jeweiligen Lastschiene aufliegen, die die Führungsnut seitlich flankieren.

Aufgabe der Erfindung ist es, eine Führungsschlittenanordnung der eingangs genannten Art zu schaffen, die eine verbesserte Führung längs der Lastschiene ermöglicht.

Diese Aufgabe wird dadurch gelöst, dass das Rollelement einen in eine Führungsnut der Lastschiene eintauchenden Führungsrollenabschnitt sowie wenigstens zwei den Führungsrollenabschnitt beidseitig flankierende Wälzabschnitte aufweist, die auf jeweils einem ebenen Oberflächenabschnitt der Lastschiene abrollen, der parallel zu der Führungsnut verläuft, und dass die Wälzabschnitte eine elastisch nachgiebige Lauffläche umfassen. Erfindungsgemäß übernimmt das Rollelement sowohl die Führungsfunktion für die Führungsschlittenanordnung in der Führungsnut der Lastschiene als auch die Stütz- und Abrollfunktion der Führungsschlittenanordnung auf der entsprechenden Lastschiene. Dadurch sind sowohl der in die Führungsnut eintauchende Führungsrollenabschnitt als auch die Wälzabschnitte drehbeweglich. Erfindungsgemäß wird für die Führungsschlittenanordnung eine vereinfachte Führung in der Führungsnut erreicht, da das Rollelement alle Funktionen übernimmt, die beim Stand der Technik durch Rollelemente und Gleitsteine verwirklicht worden waren. Die elastisch nachgiebige Lauffläche ermöglicht ein geräuscharmes Abrollen der Wälzabschnitte auf den Oberflächenabschnitten der Lastschiene. Die Lastschiene kann Teil eines Lastschienensystems sein, das wenigstens zwei zueinander parallel beabstandete Lastschienen umfasst.

In Ausgestaltung der Erfindung ist die Lauffläche jedes Wälzabschnittes durch einen Elastomerring gebildet, der in einer Ringnut des Wälzabschnittes gehalten ist. Die Ringnut gewährleistet eine Positionssicherung des Elastomerringes auch bei Druckbelastungen und entsprechenden Kompressionen des Elastomerringes. Die Ringnut hat mit ihren Seitenkanten Seitenführungsfunktion für den Elastomerring und verhindert, dass Walkbewegungen des Elastomerringes diesen längs des Wälzabschnittes und damit längs einer Drehachse des Rollelementes verlagern.

In weiterer Ausgestaltung der Erfindung ragt der Elastomerring über eine Oberfläche des Wälzabschnittes nach außen ab. Dadurch ist gewährleistet, dass der Elastomerring die Stützfläche für die Wälzabschnitte im Bereich der Oberflächenabschnitte der Lastschiene bildet. Vorzugsweise weist der Elastomerring einen rechteckigen Querschnitt auf. Bei anderen Ausführungsformen ist der Elastomerring mit einem runden Querschnitt, insbesondere einem kreisrunden oder ovalen Querschnitt versehen. In vorteilhafter Weise ist auch die Ringnut des Wälzabschnittes mit ihrem Querschnitt auf den Querschnitt des Elastomerringes abgestimmt, so dass die Ringnut bei rechteckigem Querschnitt des Elastomerringes ebenfalls einen rechteckigen Querschnitt besitzt und bei rundem Querschnitt des Elastomerringes einen korrespondierenden runden Querschnitt. Vorzugsweise ist die Ringnut etwas breiter dimensioniert als die Breite des Elastomerringes, um auch bei einer Kompression des Elastomerringes noch genügend Raum für die entsprechende elastische Deformation des Elastomerringes zur Verfügung zu stellen. In weiterer Ausgestaltung der Erfindung ist eine Drucksteifigkeit des Elastomerringes so groß gewählt, dass der Elastomerring durch ein Eigengewicht der Führungsschlittenanordnung nicht wesentlich komprimiert wird. Diese Ausgestaltung gewährleistet, dass der Elastomerring nicht bereits durch das Eigengewicht der Führungsschlittenanordnung so stark komprimiert wird, dass das wenigstens eine Rollelement auf den Wälzabschnitten aufliegt, die gegenüber dem Elastomerring formsteif ausgeführt sind.

Falls mehrere Führungsschlittenanordnungen Teil eines Trägersystems sind, wie es aus der DE 10 2005 031 072 A1 bekannt ist, sind die Elastomerringe der Führungsschlittenanordnungen vorzugsweise so ausgelegt, dass sie auch das zusätzliche Eigengewicht des Trägersystems - ohne zusätzliche Last - aufnehmen können, ohne so weit komprimiert zu werden, dass die harten Wälzabschnitte der Rollelemente auf den Oberflächenabschnitten der Lastschienen aufliegen.

In weiterer Ausgestaltung der Erfindung sind ein Querschnitt der Ringnut und eine Kompressibilität des Elastomerringes derart aufeinander abgestimmt, dass der Elastomerring bei starken Druckbelastungen so weit elastisch komprimiert wird, dass er im Bereich der Druckbelastung vollständig in der Ringnut aufgenommen ist. Falls daher zusätzlich zum Eigengewicht der Führungsschlittenanordnung sowie gegebenenfalls einem Eigengewicht eines unbelasteten Trägersystems eine Last, beispielsweise ein Transportgut aufgebracht wird, wird der wengistens eine Elastomerring so weit in seinem elastischen Deformationsbereich komprimiert, dass er keine Trag- oder Stützfunktionen mehr ausüben muss. Diese Trag- und Stützfunktionen übernehmen vielmehr die harten, formsteifen Wälzabschnitte, die vorzugsweise auch eine reduzierte Flächenpressung bewirken. Durch diese Ausgestaltung wird verhindert, dass der wenigstens eine Elastomerring bei hohen Belastungen beschädigt wird. Er wird somit ausschließlich innerhalb seines elastischen Deformationsbereiches deformiert, so dass er eine relativ große Lebensdauer besitzt. Der wenigstens eine Elastomerring kann sowohl aus einem reinen Elastomermaterial als auch aus einem thermoplastischen Elastomermaterial hergestellt sein.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Figur 1: zeigt in einem Querschnitt eine Ausführungsform einer erfindungsgemäßen Führungsschlittenanordnung in einer Funktionsposition ohne zusätzliche Last und
- Figur 2: die Führungsschlittenanordnung nach Figur 1 in einer Lastposition.

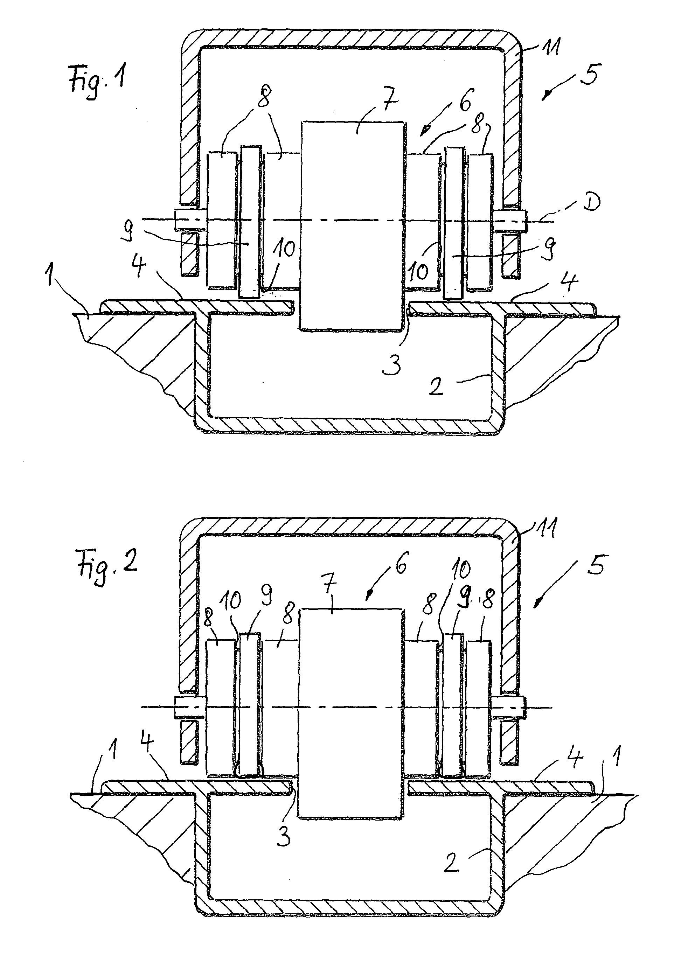

Ein Laderaum eines Kraftfahrzeugs, der als geschlossener Kofferraum einer Limousine oder als zu einem Fahrgastraum hin offener Laderaum eines Kombi-Personenkraftwagens oder ähnlichem ausgebildet sein kann, weist einen Laderaumboden 1 auf. Unter einem geschlossenen Kofferraum ist ein von einem Fahrgastraum des Personenkraftwagens vollständig abgetrennter Laderaum zu verstehen, wie er insbesondere im Heckbereich von Stufenheck-Personenkraftwagen (Limousinen) bekannt ist. In dem Laderaumboden 1 ist wenigstens eine Lastschiene 2 eingebettet, die mit einem etwa C-förmigen Hohlprofil versehen ist. Die Lastschiene 2 weist eine zum Laderaum nach oben offene Führungsnut 3 auf, die sich wenigsten über einen Teil der Länge der Lastschiene 2 erstreckt. Die Lastschiene 2 verläuft wenigstens über einen Teil einer Längs- oder Quererstreckung des Laderaumbodens 1. Die Lastschiene 2 weist 2 die Führungsnut 3 auf gegenüberliegenden Seiten flankierende Oberflächenabschnitte 4 auf, die eben gestaltet sind. Beim dargestellten Ausführungsbeispiel bilden die Oberflächenabschnitte 4 Oberseiten von T-Schenkeln des Hohlprofils der Lastschiene 2. Die Oberflächenabschnitte 4 verlaufen bündig zu einer Oberfläche des Laderaumbodens 1, oder - wie anhand der Figuren 1 und 2 erkennbar - knapp oberhalb und parallel der Oberfläche des Laderaumbodens 1.

Längs der Lastschiene 2 ist eine Führungsschlittenanordnung 5 verfahrbar gelagert. Die Führungsschlittenanordnung 5 weist einen als Gehäuse gestalteten Schlittenträger 11 auf, in dem wenigstens ein Rollelement 6 drehbar gelagert ist. Das Rollelement 6 ist um eine Drehachse D in gegenüberliegenden Gehäuseseitenwandungen des Schlittenträgers 11 drehbar gelagert. Hierzu ragen Drehlagerbolzen des Rollelementes 6 in entsprechende Lageraufnahmen der Gehäuseseitenwandungen des Schlittenträgers 11 hinein. Die Drehachse D verläuft in der in Figur 1 dargestellten Funktionsposition der Führungsschlittenanordnung 5 parallel zu den Oberflächenabschnitten 4 und damit auch parallel zur Oberfläche des Laderaumbodens 1.

Das Rollelement 6 ist spiegelsymmetrisch zu einer vertikalen Mittellängsebene gestaltet und weist in seinem mittleren Bereich einen zylindrischen Führungsrollenabschnitt 7 auf, an den sich auf gegenüberliegenden Seiten zwei ebenfalls im Wesentlichen zylindrische Wälzabschnitte 8 anschließen. Die beiden Wälzabschnitte 8 weisen identische Durchmesser auf. Der Führungsrollenabschnitt 7 ist mit einem gegenüber dem Durchmesser der Wälzabschnitte 8 größeren Durchmesser versehen. Eine Breite des Führungsrollenabschnittes ist derart auf eine Breite der Führungsnut 3 der Lastschiene 2 abgestimmt, dass der Führungsrollenabschnitt 7 mit geringem axialen Spiel - auf die Drehachse D bezogen - in die Führungsnut 3 eintauchen kann, wie anhand der Figuren 1 und 2 erkennbar. Da die beiden Wälzabschnitte 8 von gegenüberliegenden Stirnseiten des Führungsrollenabschnittes 7 jeweils nach außen abragen, sind diese im Wesentlichen neben der Führungsnut 3 und damit oberhalb der Oberflächenabschnitte 4 der Lastschiene 2 angeordnet.

Jeder Wälzabschnitt 8 weist jeweils eine Ringnut 10 auf, die einen rechteckigen Querschnitt besitzt. In jeder Ringnut 10 ist ein Elastomerring 9 gehalten, der ebenfalls einen rechteckigen Querschnitt besitzt. Im unbelasteten Zustand ist die Breite des Elastomerringes 9 geringer als die Breite der jeweiligen Ringnut 10, so dass der Elastomerring 9 mit axialem Spiel in der Ringnut 10 gehalten ist. Die Wälzabschnitte 8 sind gegenüber den Elastomerringen 9 formsteif ausgebildet. Die Breite der Lauffläche der Wälzabschnitte 8 axial neben der jeweiligen Ringnut 10 ist wesentlich größer als die Breite des Elastomerringes 9. Vorzugsweise ist die Breite jedes Wälzabschnittes 8 mehr als doppelt so groß wie die Breite des Elastomerringes 9.

Die Drucksteifigkeit der Elastomerringe 9 des Rollelementes 6 ist so groß bemessen, dass diese in normaler Funktionsposition der Führungsschlittenanordnung 5, in der sie lediglich das Eigengewicht der Führungsschlittenanordnung tragen müssen, nahezu nicht komprimiert werden. Diese normale Funktionsposition ist in Figur 1 dargestellt. Es ist erkennbar, dass die Elastomerringe 9 in dieser normalen Funktionsposition die ausschließliche Lauffläche des Rollelementes 6 auf den Oberflächenabschnitten 4 der Lastschiene 2 definieren. Dazu ist die radiale Dicke jedes Elastomerringes 9 größer als die Tiefe der zugeordneten Ringnut 10. Die Wälzabschnitte 8 werden somit in Abstand zu den Oberflächenabschnitten 4 der Lastschiene 2 gehalten.

Sobald nun auf die Führungsschlittenanordnung eine zusätzliche Drucklast von oben her einwirkt, werden die Elastomerringe 9 soweit komprimiert, dass diese vollständig im jeweiligen, momentanen Druckbereich im Bereich der Oberflächenabschnitte 4 in die jeweilige Ringnut 10 eintauchen, so dass die Wälzabschnitte 8 die Stütz- und Abrollfunktion auf den Oberflächenabschnitten 4 der Lastschiene 2 übernehmen. Dadurch wird verhindert, dass die Elastomerringe 9 über ihre elastische Grenze hinaus deformiert werden. Das Eintauchen in der jeweiligen Ringnut dient somit zur Schonung der Elastomerringe 9. Gleichzeitig können die formsteifen Oberflächen der Wälzabschnitte 8 wesentlich höhere Lasten abstützen bei gleichzeitig stark reduzierter Rollreibung. Sobald die zusätzliche Druckbelastung von der Führungsschlittenanordnung 5 wieder weggenommen ist, drückt die elastische Rückstellkraft der Elastomerringe 9 das Rollelement 6 und damit auch die Führungsschlittenanordnung 5 wieder nach oben, so dass wieder ein Abstand zwischen den Wälzabschnitten 8 und den Oberflächenabschnitten 4 der Lastschiene 2 hergestellt wird.

Die gegenüberliegenden Stirnseiten des zylindrischen Führungsrollenabschnittes 7 übernehmen die Führungs- und Leitposition für die Führungsschlittenanordnung 5 in der Führungsnut 3. Denn dadurch, dass der Führungsrollenabschnitt 7 in die Führungsnut 3 eintaucht, wird er durch deren Seitenränder zwangsläufig über die Länge der Führungsnut 3 seitlich geführt, wodurch sich die gewünschte Längsführungsfunktion ergibt.

## Patentansprüche

1. Führungsschlittenanordnung für eine Lastschiene eines Laderaumes eines Kraftfahrzeugs mit einem Schlittenträger, in dem wenigstens ein teilweise aus dem Schlittenträger herausragendes Rollelement drehbar gelagert ist, **dadurch gekennzeichnet, dass** das Rollelement (6) einen in eine Führungsnut (3) der Lastschiene (2) eintauchenden Führungsrollenabschnitt (7) sowie wenigstens zwei den Führungsrollenabschnitt (7) beidseitig flankierende Wälzabschnitte (8) aufweist, die auf jeweils einem ebenen Oberflächenabschnitt der Lastschiene abrollen, der parallel zu der Führungsnut (3) verläuft, und dass die Wälzabschnitte (8) eine elastisch nachgiebige Lauffläche (9) umfassen.

2. Führungsschlittenanordnung nach Anspruch 1, **dadurch gekennzeichnet, dass** die Lauffläche jedes Wälzabschnittes (8) durch einen Elastomerring (9) gebildet ist, der in einer Ringnut (10) des Wälzabschnittes (8) gehalten ist.

3. Führungsschlittenanordnung nach Anspruch 2, **dadurch gekennzeichnet, dass** der Elastomerring (9) über eine Oberfläche des Wälzabschnittes (8) nach außen abragt.

4. Führungsschlittenanordnung nach Anspruch 2 oder 3, **dadurch gekennzeichnet, dass** eine Drucksteifigkeit des Elastomerringes (9) so groß gewählt ist, dass der Elastomerring (9) durch ein Eigengewicht der Führungsschlittenanordnung (5) nicht wesentlich komprimiert wird.

5. Führungsschlittenanordnung nach Anspruch 2, **dadurch gekennzeichnet, dass** eine Tiefe der Ringnut (10) und eine Kompressibilität des Elastomerringes (9) derart aufeinander abgestimmt sind, dass der Elastomerring (9) bei starken Druckbelastungen so weit elastisch komprimiert wird, dass er im Bereich der momentanen Druckbelastung vollständig in der Ringnut (10) aufgenommen wird.
